Europäisches Patentamt

European Patent Office

Office européen des brevets

(19)

(11) Veröffentlichungsnummer : **0 073 795**
**B1**

(12) **EUROPÄISCHE PATENTSCHRIFT**

(45) Veröffentlichungstag der Patentschrift :
09.10.85

(51) Int. Cl.⁴ : **B 60 R 22/00**

(21) Anmeldenummer : **82900793.9**

(22) Anmeldetag : **11.03.82**

(86) Internationale Anmeldenummer :
**PCT/DE 82/00051**

(87) Internationale Veröffentlichungsnummer :
**WO/8203207 (30.09.82 Gazette 82/23)**

(54) TRÄGHEITSELEMENT FÜR GURTAUFROLLER FÜR KRAFTFAHRZEUG-SICHERHEITSGURTE..

(30) Priorität : 13.03.81 DE 3109554

(43) Veröffentlichungstag der Anmeldung :
16.03.83 Patentblatt 83/11

(45) Bekanntmachung des Hinweises auf die Patenterteilung : 09.10.85 Patentblatt 85/41

(84) Benannte Vertragsstaaten :
FR

(56) Entgegenhaltungen :
DE-A- 2 047 592
FR-A- 2 304 361
FR-A- 2 463 628
US-A- 3 912 177
US-A- 4 058 272

(73) Patentinhaber : AUTOFLUG GMBH
Industriestrasse 10 Postfach 1180
D-2084 Rellingen (DE)

(72) Erfinder : BUTENOP, Klaus
Obendeich 29
D-2209 Herzhorn (DE)
Erfinder : SINGER, Klaus-Peter
Mildestieg 25
D-2000 Hamburg 60 (DE)

(74) Vertreter : Kühnemann, Klaus
Sonderburgstrasse 36
D-4000 Düsseldorf 11 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft ein Trägheitselement als Steuerorgan für Sperrglieder von Gurtaufrollern, insbesondere für Kraftfahrzeug-Sicherheitsgurte, mit wenigstens gurtbandsensitiver Blockierung der Gurtaufwickelwelle, das mit der Gurtaufwickelwelle verbindbar und als vorzugsweise napfförmiges Rad gestaltet ist, mit einem der Erhöhung der Masseträgheit dienenden Bestandteil sowie einer Rückstellfeder.

In selbstsperrenden Gurtaufrollern wird bei Beschleunigung der Abrollbewegung des Sicherheitsgurtes die Gurtaufwickelwelle blockiert und das weitere Abspulen des Gurtbandes unterbunden. Dies geschieht, indem ein auf der Gurtaufwickelwelle gelagertes und sich mit ihr drehendes Sperrglied über eine entsprechend gestaltete Verbindung von einem Steuerorgan bis zum Eingriff des Sperrgliedes in eine gehäusefeste Verzahnung ausgelenkt wird, womit die Drehbewegung der Gurtaufwickelwelle blockiert ist. Hierzu weist das Steuerorgan eine größere Masseträgheit als das Sperrglied auf, so daß bei entsprechender Beschleunigung der Abrollbewegung des Sicherheitsgurtes das träge Steuerorgan — Trägheitselement — hinter der Drehbewegung der Gurtaufwickelwelle mit Sperrglied zurückbleibt und das Sperrglied auslenkt (gurtbandsensitives System).

Zusätzlich kann das Steuerorgan noch Anschläge für einen Hebel aufweisen, der von einem auf Beschleunigung des Fahrzeuges ansprechenden Sensor betätigbar ist (fahrzeugsensitives System). Bei Ansprechen des Sensors wird die Drehbewegung des als Trägheitselement ausgebildeten Steuerorgans angehalten, wodurch dieses ebenfalls hinter der Drehbewegung der Gurtaufwickelwelle mit Sperrglied zurückbleibt und das Sperrglied auslenkt.

Ein Trägheitselement, gemäß der Gattung des Anspruchs 1, ist in der FR-A1-2 304 361 Patentschrift bekannt und besteht aus einem Stahlring, der mit Laufsitz unmittelbar auf dem Sperrglied gelagert und auf dessen Umfang ein Kunststoffring mit Preßsitz gehalten ist, welcher über angeformte Nocken mit Steuernocken des Sperrglieds zur Betätigung desselben zusammenwirkt. Hiermit ist der Nachteil verbunden, daß die Herstellung der Verbindung von Stahlring und Kunststoffkranz im Preßsitz aufwendig ist und eine genaue Dimensionierung der Teile erfordert. Der Preßsitz ist weiterhin deswegen nachteilig, weil er hinsichtlich der Funktionssicherheit des gesamten Sperrsystems des Gurtaufrollers nicht ausreichend ist. Denn im Interesse dieser Funktionssicherheit muß zwischen dem metallischen Trägheitskörper und der Trägheitsscheibe aus Kunststoff eine derartige Verbindung hergestellt sein, daß eine relative Verdrehung der beiden Bauteile gegeneinander verhindert wird.

Beim Ansprechen des Trägheitselementes besteht nämlich die Gefahr, daß der beim Stand der Technik nur mit Preßsitz gehaltene Trägheitsring sich zunächst in dem Trägheitselement gegenüber diesem verdreht und so die Trägheitskräfte gar nicht auf das Trägheitselement wirken können, weswegen eine sichere Blockierung des Gurtaufrollers verzögert wird.

## Darstellung der Erfindung

Ausgehend von dem beschriebenen Stand der Technik liegt der Erfindung die Aufgabe zugrunde, ein Trägheitselement zu schaffen, welches einfach und preiswert herstellbar und dabei in seiner Funktion sicher ist.

Die erfindungsgemäße Lösung dieser Aufgabe ergibt sich einschließlich vorteilhafter Ausgestaltungen und Weiterbildungen aus dem Inhalt der Patentansprüche, welche dieser Beschreibung nachgestellt sind.

Mit dem Erfindungsgedanken eines vorzugsweise einschnappbaren Ringes als Trägheitsmasse in einem Trägheitselement bzw. Steuerorgan ist der Vorteil verbunden, daß die beiden Bauteile getrennt hergestellt werden können und zur Montage nur noch mechanisch verbunden, insbesondere bis zum Einschnappen in einander gedrückt zu werden brauchen. Hierzu können entweder der Ring starr und die Halterungsvorsprünge federnd oder der Ring, insbesondere Drahtring, federnd und die Vorsprünge starr ausgebildet sein. Bei einer bevorzugten Ausführungsform ist der Drahtring gegen Verdrehen gesichert und verbleibt stets in seiner Lage.

## Kurze Beschreibung der Zeichnungen

In der Zeichnung ist ein Ausführungsbeispiel der Erfindung wiedergegeben, welches nachstehend beschrieben wird. Es zeigen :

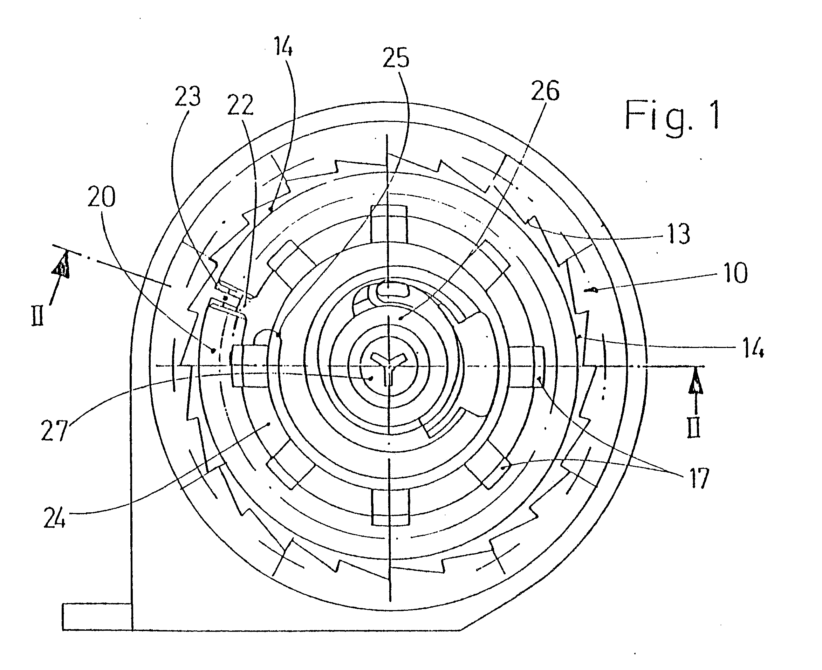

Figur 1 eine Draufsicht auf die Verriegelungsseite eines Gurtaufrollers mit dem Trägheitselement,

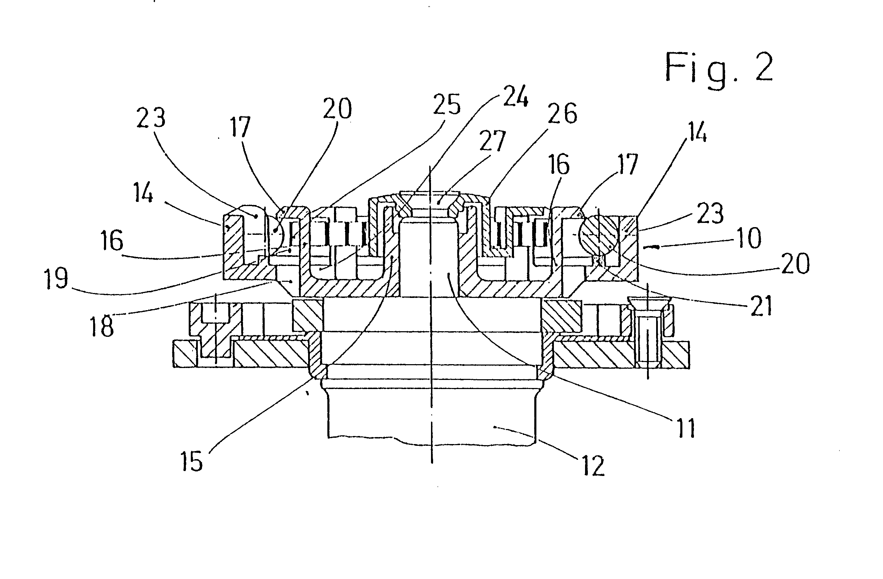

Figur 2 die Verriegelungsseite in einem Schnitt nach der Linie II-II in Figur 1.

## Ausführung der Erfindung

Ein radartiges, aus Kunststoff bestehendes Trägheitselement 10, auch Trägheitsscheibe genannt, ist auf einen Fortsatz 11 der Gurtaufwickelwelle 12 eines Gurtaufrollers aufgesteckt und an seinem äußeren Umfang mit sägezahnartig gestalteten Zähnen 13 versehen, die in gleichmäßigen Abständen über den Umfang des Trägheitselementes 10 verteilt angeordnet sind. Das Trägheitselement 10 ist an seiner nach außen gerichteten, dem Gurtaufroller abgewandten Seite napfförmig gestaltet und hat einen Innenraum zwischen einem äußeren Umfangsrand 14 und einer in der Mitte des Napfes hervorstehenden, einstückig angeformten Hülse 15, die zum Aufstecken und damit zur Lagerung des Trägheitselementes 10 auf dem Wellenfortsatz 11 dient. Der Innenraum ist in zwei Ringräume unterteilt durch stegartige, senkrecht zum Boden des Trägheitselementes 10 angeordnete Vorsprünge 16, die auf einem Kreis liegen und mit gleichmäßigem Abstand zueinander angeordnet sind. An ihrem oberen Ende weisen die Vorsprünge 16 nach außen zum Umfangsrand 14 des Trägheitselementes 10 hinweisende Haken 17 auf. Am Fußpunkt der Vorsprünge 16 befinden sich Durchbrechungen 18, die in ihrer Abmessung jeweils dem darüber befindlichen Haken 17 entsprechen.

In dem vom äußeren Umfangsrand 14 und den Vorsprüngen 16 gebildeten Ringraum 19 ist ein gebogener Drahtring 20 eingelegt, dessen Durchmesser so gewählt ist, daß die Haken 17 der Vorsprünge 16 den Drahtring 20 in eingelegtem Zustand um ein geringes Maß übergreifen und diesen so im Trägheitselement 10 festhalten. Da die Vorsprünge 16 mit Haken 17 aufgrund ihres Materials und ihrer Formgebung federnd sind, ist der Drahtring 20 in den Ringraum 19 zwischen dem Umfangsrand 14 und den Haken 17 der Vorsprünge 16 eindrückbar und liegt sodann auf einer am Boden des Ringraumes 19 einstückig angeformten umlaufenden Sockelleiste 21 auf.

Der Drahtring 20 ist nicht vollständig geschlossen, sondern weist eine Lücke 22 auf. Ein mit der Innenseite des äußeren Umfangsrandes 14 sowie dem Boden des Trägheitselementes 10 einstückig verbundener Vorsprung 23 ragt nach innen in den Ringraum 19 hinein, wobei der Drahtring 20 in den Ringraum 19 so eingelegt ist, daß der Vorsprung 23 in die Lücke 22 des Drahtringes 20 eingreift und diesen gegen Wandern in Umfangsrichtung festlegt. Der Vorsprung 23 ist in der Mitte eines durch zwei Vorsprünge 16 begrenzten Abschnittes des Ringraumes 19 angeordnet.

Der Vorsprung 23 überragt den Umfangsrand 14 des Trägheitselementes 10 um ein geringes Maß, so daß der Drahtring 20 schon vor dem Eindrücken in den Ringraum 19 in der richtigen Stellung auf das Trägheitselement 10 aufgelegt werden und beim Eindrücken nicht mehr verrutschen kann.

Um den Einschnappvorgang des Drahtringes 20 in den Ringraum 19 zu erleichtern, weist die Lücke 22 eine etwas größere Breite als die Breite des Vorsprunges 23 auf. Aus dem gleichen Grund sind die beiden an die Lücke 22 angrenzenden Enden des Drahtringes 20 abgefast, damit sich die Drahtenden beim Eindrücken nicht am Vorsprung 23 verhaken.

In einem von der Hülse 15 und den Vorsprüngen 16 gebildeten inneren Ringraum 24 befindet sich eine spiralförmige g-Wert-Feder 25 als Rückstellfeder, die mit ihrem einen Ende an einem der Vorsprünge 16 und mit dem anderen Ende an einem büchsenförmigen Widerlager 26 eingehängt ist. Das Widerlager 26 ist über die Hülse 15 des Trägheitselementes 10 gesteckt und mittels einer Schraube 27 auf dem Fortsatz 11 der Gurtaufwickelwelle 12 befestigt.

Der Boden des napfförmigen Trägheitselementes 10 ist in seinem äußeren, den Drahtring 20 tragenden Bereich etwa um seine Wandstärke mittels einer abgeschrägten Stufe höher gelegt.

## Patentansprüche

1. Trägheitselement (10) als Steuerorgan für Sperrglieder von Gurtaufrollern, insbesondere für Kraftfahrzeug-Sicherheitsgurte, mit wenigstens gurtbandsensitiver Blockierung der Gurtaufwickelwelle (12), das mit der Gurtaufwickelwelle (12) verbindbar und als vorzugsweise napfförmiges Rad gestaltet ist, mit einem der Erhöhung der Masseträgheit dienenden Bestandteil (20) sowie einer Rückstellfeder (25), wobei der Bestandteil (20) als gesonderter, die Achse der Gurtaufwickelwelle (12) mit Abstand umgebender Ring, insbesondere Metallring, ausgebildet und an Vorsprüngen (16, 17) des Trägheitselementes (10) gehaltert ist, dadurch gekennzeichnet, daß der Metallring (20) eine Lücke (22) aufweist, in die ein am Trägheitselement (10) angeformter Vorsprung (23) hineinragt.

2. Trägheitselement nach Anspruch 1, dadurch gekennzeichnet, daß Ring (20) und Vorsprung (23) auf der Innenseite des Umfangsrandes (14) des Trägheitselementes (10) und der Vorsprung (23) zwischen zwei Vorsprüngen (16) zur Halterung des Metallringes angeordnet sind bzw. ist.

3. Trägheitselement nach Anspruch 1 und 2, dadurch gekennzeichnet, daß der Vorsprung (23) den Umfangsrand (14) überragt.

4. Trägheitselement nach Anspruch 1, dadurch gekennzeichnet, daß die Breite der Lücke (22) des Metallringes (20) etwas größer als die Breite des Vorsprunges (23) ist.

5. Trägheitselement nach Anspruch 1, dadurch gekennzeichnet, daß die an die Lücke (22) angrenzenden Enden des Metallringes (20) abgefast sind.

6. Trägheitselement nach einem der vorangehenden Ansprüche, dadurch gekennzeichnet, daß der Ring (20) in einem vom äußeren Umfangsrand (14) des Trägheitselementes (10) und den Halterungsvorsprüngen (16) gebildeten Ringraum (19) untergebracht ist.

7. Trägheitselement nach Anspruch 6, dadurch gekennzeichnet, daß der Ring (20) durch an den Vorsprüngen (16) angeformte, zum Ringraum (19) zeigende Haken (17) um ein geringes Maß übergriffen und im Ringraum (19) festgehalten ist.

8. Trägheitselement nach Anspruch 6, dadurch gekennzeichnet, daß der Ring (20) durch am Umfangsrand (14) angeformte zum Ringraum (19) zeigende Haken um ein geringes Maß übergriffen und im Ringraum (19) festgehalten ist.

9. Trägheitselement nach Anspruch 7 oder 8, dadurch gekennzeichnet, daß der Ring (20) in den Ringraum (19) eindrückbar ist, indem die Vorsprünge (16) federnd gestaltet sind.

10. Trägheitselement nach Anspruch 6, dadurch gekennzeichnet, daß der Ring (20) auf einer ringförmigen Sockelleiste (21) aufgelagert ist.

11. Trägheitselement nach Anspruch 6, dadurch gekennzeichnet, daß der den Ring (20) enthaltende Ringraum (19) des Trägheitselementes (10) gegenüber dem Napfboden etwa um dessen Materialstärke erhöht angeordnet ist.

12. Trägheitselement nach Anspruch 1, dadurch gekennzeichnet, daß der Ring (20) außen um den Umfang (14) des Trägheitselementes (10) herumlaufend angeordnet und gehaltert ist.

13. Trägheitselement nach einem der vorangehenden Ansprüche, dadurch gekennzeichnet, daß der Ring (20) als Dreh- oder Stanzteil gefertigt ist.

14. Trägheitselement nach einem der vorangehenden Ansprüche, dadurch gekennzeichnet, daß der Ring (20) aus Draht gebogen ist.

15. Trägheitselement nach Anspruch 13 oder 14, dadurch gekennzeichnet, daß der Ring (20) einen viereckigen, vorzugsweise rechteckigen Querschnitt hat.

16. Trägheitselement nach Anspruch 13 oder 14, dadurch gekennzeichnet, daß der Ring (20) einen kreisförmigen Querschnitt hat.

**Claims**

1. Inertial element (10) as a control mechanism for locking members in belt reeling mechanisms, particularly for safety belts in motor vehicles, with at least belt-sensitive blocking of the belt winding spindle (12), which can be connected to the beld winding spindle (12) and is preferably in the form of a disk-shaped wheel, having a component (20) which serves to increase the mass moment of inertia and a return spring (25), the component (20) being formed as a seperate ring, more particularly a metallic ring, surrounding the axis of the belt winding spindle (12) at a distance, and being supported on projections (16, 17) from the inertial element (10), characterised in that the metallic ring (20) has a gap (22) into which a projection (23) formed on the inertial element (10) engages.

2. Inertial element as claimed in claim 1, characterised in that the ring (20) and projection (23) are provided on the inside of the peripheral edge (14) of the inertial element (10) and the projection (23) is mounted between two projections (16) for holding the wire ring (20) in position.

3. Inertial element as claimed in claims 1 and 2, characterised in that the projection (23) projects over the peripheral edge (14).

4. Inertial element as claimed in claim 1, characterised in that the width of the gap (22) in the wire ring (20) is somewhat greater than the width of the projection (23).

5. Inertial element as claimed in claim 1, characterised in that the ends of the wire ring (20) adjacent to the gap (22) are chamfered.

6. Inertial element as claimed in one of the preceding claims, characterised in that the ring (20) is housed in an annular compartment (19) formed by the outer peripheral edge (14) of the inertial element (10) and the holding projections (16).

7. Inertial element as claimed in claim 6, characterised in that hooks (17) formed on the projections (16) and pointing towards the annular chamber (19) project slightly over the ring (20) and hold it in place in the annular chamber (19).

8. Inertial element as claimed in claim 6, characterised in that hooks formed on the peripheral edge (14) and pointing towards the annular chamber (19) project slightly over the ring (20) and hold it in place in the annular chamber (19).

9. Inertial element as claimed in claim 7 or 8, characterised in that the ring (20) can be pressed into the annular chamber (19), the projections (16) being resiliently formed.

10. Inertial element as claimed in claim 6, characterised in that the ring (20) is mounted on an annular base strip (21).

11. Inertial element as claimed in claim 6, characterised in that the annular chamber (19) of the inertial element (10) containing the ring (20) is raised above the base of the dish by an amount corresponding substantially to the thickness of the material thereof.

12. Inertial element as claimed in claim 1, characterised in that the ring (20) is arranged and clamped so as to extend around the outer periphery (14) of the inertial element (10).

13. Inertial element as claimed in one of the preceding claims, characterised in that the ring (20) is produced as a turned or stamped part.

14. Inertial element as claimed in one of the preceding claims, characterised in that the ring (20) is produced by bending wire.

15. Inertial element as claimed in claim 13 or 14, characterised in that the ring (20) is quadrilateral, preferably rectangular in cross section.

16. Inertial element as claimed in claim 13 or 14, characterised in that the ring (20) is circular in cross section.

**Revendications**

1. Elément d'inertie (10) formant organe de commande d'éléments de blocage d'enrouleurs de ceintures, en particulier de ceintures de sécurité pour véhicules automobiles avec au moins un système de blocage de l'arbre d'enroulement (12), de la ceinture réagissant à la sangle de ceinture, l'élément d'inertie pouvant être lié à l'arbre d'enroulement (12), étant configuré de préférence comme une roue en forme de cuvette, et étant muni d'une partie constitutive (20) servant à augmenter l'inertie de masse, ainsi que d'un ressort de rappel (25), la partie constitutive (20) étant réalisée sous la forme d'une bague séparée, bague métallique notamment, entourant à distance l'axe de l'arbre d'enroulement (12), et fixée à des épaulements (16, 17) de l'élément d'inertie (10), caractérisé en ce que la bague métallique (20) présente une fente (22) dans laquelle rentre un épaulement (23) formé sur l'élément d'inertie (10).

2. Elément d'inertie selon la revendication 1, caractérisé en ce que la bague (20) et l'épaulement (23) sont disposés sur le côté intérieur du bord périphérique (14) de l'élément d'inertie (10) et que l'épaulement (23) est disposé entre deux épaulements (16) servant à fixer la bague métallique.

3. Elément d'inertie selon la revendication 1 ou 2, caractérisé en ce que l'épaulement (23) dépasse du bord périphérique (14) de l'élément d'inertie (10).

4. Elément d'inertie selon la revendication 1, caractérisé en ce que la largeur de la fente (22) de la bague métallique (20) est légèrement supérieure à la largeur de l'épaulement (23).

5. Elément d'inertie selon la revendication 1, caractérisé en ce que les extrémités de la bague métallique (20) contiguës à la fente (22) sont chanfreinées.

6. Elément d'inertie selon l'une quelconque des revendications 1 à 5, caractérisé en ce que la bague (20) est logée dans un espace annulaire (19) formé par le bord périphérique (14) extérieur de l'élément d'inertie (10) et par les épaulements de fixation (16).

7. Elément d'inertie selon la revendication 6, caractérisé en ce que des crochets (17) formés sur les épaulements (16) et tournés vers l'espace annulaire (19) débordent légèrement au-dessus de la bague (20) et la maintiennent dans l'espace annulaire (19).

8. Elément d'inertie selon la revendication 6, caractérisé en ce que des crochets (17) formés sur le bord périphérique (14) et tournés vers l'espace annulaire (19) débordent légèrement au-dessus de la bague (20), et la maintiennent dans l'espace annulaire (19).

9. Elément d'inertie selon l'une quelconque des revendications 7 et 8, caractérisé en ce que la bague (20) peut être enfoncée dans l'espace annulaire (19), les épaulements (16) étant élastiques.

10. Elément d'inertie selon la revendication 6, caractérisé en ce que la bague (20) repose sur une nervure annulaire (21).

11. Elément d'inertie selon la revendication 6, caractérisé en ce que l'espace annulaire (19) de l'élément d'inertie (10) contenant la bague (20) est, par rapport au fond de la cuvette, disposé surélevé approximativement de l'épaisseur de paroi de ce fond.

12. Elément d'inertie selon la revendication 1, caractérisé en ce que la bague (20) est disposée et fixée tout autour du bord de la circonférence (14) de l'élément d'inertie (10).

13. Elément d'inertie selon l'une quelconque des revendications 1 à 12, caractérisé en ce que la bague (20) est fabriquée au tour ou à la presse.

14. Elément d'inertie selon l'une quelconque des revendications 1 à 13, caractérisé en ce que la bague (20) est fabriquée par cintrage de fil métallique.

15. Elément d'inertie selon l'une quelconque des revendications 13 et 14, caractérisé en ce que la bague (20) a une section quadrangulaire, de préférence carrée.

16. Elément d'inertie selon l'une quelconque des revendications 13 et 14, caractérisé en ce que la bague (20) a une section circulaire.

Fig. 1

13

10

14

II

17

26

25

14

22

23

20

II

27

24

Fig. 2

0 073 795